# EUROPÄISCHE PATENTSCHRIFT

(11) **EP 4 412 896 B1**
(45) Veröffentlichungstag und Bekanntmachung des Hinweises auf die Patenterteilung: **16.07.2025**
(21) Anmeldenummer: 22798134.7
(22) Anmeldetag: 05.10.2022
(51) Int. Cl.: B62M 6/45

(54) **VERFAHREN ZUR STEUERUNG EINES ELEKTROMOTORS EINES ELEKTRISCHEN FAHRRADS**
METHOD FOR CONTROLLING AN ELECTRIC MOTOR OF AN ELECTRIC BICYCLE
PROCÉDÉ DE COMMANDE D'UN MOTEUR ÉLECTRIQUE DE BICYCLETTE ÉLECTRIQUE

(30) Priorität: 06.10.2021 DE 102021211270
(43) Veröffentlichungstag der Anmeldung: 14.08.2024
(73) Patentinhaber: ZF Friedrichshafen AG, 88046 Friedrichshafen (DE)
(72) Erfinder: RÖSCH, Patrik, 88326 Aulendorf (DE)
(74) Vertreter: ZF Friedrichshafen AG
(86) Internationale Anmeldenummer: PCT/EP2022/077685
(87) Internationale Veröffentlichungsnummer: WO 2023/057504

(56) Entgegenhaltungen:
- EP-A1- 2 604 499
- WO-A1-2020/156784
- DE-A1- 102019 113 348

## Beschreibung

### Technisches Gebiet

Das technische Gebiet betrifft Verfahren zur Steuerung eines Elektromotors eines elektrischen Fahrrads.

### Stand der Technik

Aus dem Stand der Technik sind Verfahren zur Steuerung eines Elektromotors eines elektrischen Fahrrads bekannt, wobei der Elektromotor in Abhängigkeit von einer Bewegung der Kurbel gesteuert wird.

EP 2 604 499 A1 betrifft ein elektrisch unterstütztes Fahrrad, das in der Lage ist, ein Eingangsdrehmoment durch einen Motor effizient auf die Tretkraft anzuwenden. Ein solches Fahrrad umfasst einen Tretkraftsensor zur Erfassung der auf ein Pedal ausgeübten Tretkraft, einen Motor zur Unterstützung der Antriebskraft basierend auf dem Ausgang des Tretkraftsensors, einen Kurbelwinkelsensor zur Erfassung des Kurbelwinkels einer mit dem Pedal verbundenen Kurbelwelle, ein Mittel zur Berechnung der Drehfrequenz der Kurbelwelle aus dem Kurbelwinkel und eine Steuerungseinheit zur Anpassung der vom Motor erzeugten Unterstützungskraft in Abhängigkeit von der Phase des Kurbelwinkels und der berechneten Drehfrequenz.

### Darstellung der Erfindung

Die Erfindung betrifft ein Verfahren zur Steuerung eines Elektromotors eines elektrischen Fahrrads. Das elektrische Fahrrad kann eine Batterie als Energiespeicher aufweisen. Der Elektromotor kann ein Motorsteuergerät aufweisen und das Motorsteuergerät kann eingerichtet sein, das Verfahren zur Steuerung des Elektromotors auszuführen. Das Motorsteuergerät kann eingerichtet sein, eine Energieversorgung des Elektromotors mit in der Batterie gespeicherter elektrischer Energie durch das Verfahren zu steuern.

Das Fahrrad weist den Elektromotor und eine Kurbel auf. Über ein mit der Kurbel verbundenes Kettenblatt kann über eine Kette ein Hinterrad des Fahrrads angetrieben werden. Der Elektromotor und die Kurbel können so verbunden sein, dass der Elektromotor eine Drehbewegung der Kurbel beeinflussen kann. Die Kurbel kann an Enden der Kurbel jeweils ein Pedal für einen Fuß eines Fahrers des Fahrrads aufweisen. Der Fahrer kann über Muskelkraft ein Eingangsdrehmoment auf die Kurbel aufbringen. Der Elektromotor kann ein zusätzliches Drehmoment auf die Kurbel aufbringen. Eine Summe aus Eingangsdrehmoment und zusätzlichen Drehmoment des Elektromotors kann über die Kette das Hinterrad antreiben.

Das Verfahren weist einen Schritt eines Erfassens des Eingangsdrehmoments zu wenigstens zwei unterschiedlichen Zeitpunkten auf. Das Eingangsdrehmoment kann periodisch erfasst werden und alternativ oder zusätzlich kann das Eingangsdrehmoment zu mehr als zwei unterschiedlichen Zeitpunkten erfasst werden. Das Fahrrad kann einen Sensor aufweisen, womit das Erfassen des Eingangsdrehmoment erfolgen kann. Das Verfahren weist ferner einen Schritt eines Erfassens einer Kadenz der Kurbel zu wenigstens zwei unterschiedlichen Zeitpunkten auf. Die Kadenz der Kurbel kann periodisch erfasst werden und alternativ oder zusätzlich kann die Kadenz zu mehr als zwei unterschiedlichen Zeitpunkten erfasst werden. Das Fahrrad kann einen Sensor aufweisen, womit das Erfassen der Kadenz der Kurbel erfolgen kann.

Das Verfahren weist ferner einen Schritt eines Bestimmens einer zeitlichen Änderung des Eingangsdrehmoments basierend auf dem erfassten Eingangsdrehmoment zu wenigstens zwei unterschiedlichen Zeitpunkten auf. Das Verfahren weist ferner einen Schritt eines Bestimmens einer zeitlichen Änderung der Kadenz basierend auf der erfassten Kadenz zu wenigstens zwei unterschiedlichen Zeitpunkten auf. Der Schritt des Bestimmens der zeitlichen Änderung des Eingangsdrehmoments und alternativ oder zusätzlich der zeitlichen Änderung der Kadenz kann basierend auf allen erfassten Eingangsdrehmomenten und allen erfassten Kadenzen erfolgen. Im Schritt des Bestimmens kann eine Funktion des Eingangsdrehmoments und alternativ oder zusätzlich eine Funktion der Kadenz als Funktion der Zeit bestimmt werden. Im Schritt des Bestimmens kann eine Funktion der zeitlichen Änderung des Eingangsdrehmoments und alternativ oder zusätzlich eine Funktion der zeitlichen Änderung der Kadenz als Funktion der Zeit bestimmt werden. Alternativ oder zusätzlich kann im Schritt des Bestimmens der zeitlichen Änderungen des Eingangsdrehmoments und der Kadenz eine relative Änderung des erfassten Werts von Eingangsdrehmoment beziehungsweise Kadenz zum vorherigen erfassten Wert bestimmt werden.

Das Verfahren weist ferner einen Schritt eines Bestimmens eines Basisdrehmoments in Abhängigkeit von der zeitlichen Änderung des Eingangsdrehmoments und in Abhängigkeit von der zeitlichen Änderung der Kadenz auf. Der Schritt des Bestimmens des Basisdrehmoments kann iterativ erfolgen, wobei für einen n. Schritt des Bestimmens des Basisdrehmoments das Basisdrehmoment aus dem n-1. Schritt des Bestimmens des Basisdrehmoments verwendet werden kann. Der Schritt des Bestimmens des Basisdrehmoments kann in anderen Worten somit auch ein Filtern des Basisdrehmoments aus vorherigen Bestimmungsschritten des Basisdrehmoments darstellen. Der Schritt des Bestimmens des Basisdrehmoments kann in Abhängigkeit von dem Eingangsdrehmoment, insbesondere von dem absoluten Wert des Eingangsdrehmoments erfolgen. So kann in einem ersten Schritt des Bestimmens des Basisdrehmoments das Basisdrehmoment gleich dem Eingangsdrehmoment angenommen werden und die Iteration kann gestartet werden. Mit einer Dynamikfunktion können die Iterationsschritte verringert werden. So kann ein zu bestimmendes Basisdrehmoment bei geänderten zeitlichen Änderungen des Eingangsdrehmoments und der Kadenz schneller erreicht oder angefiltert werden.

Im Schritt des Bestimmens des Basisdrehmoments nimmt die Abhängigkeit des Basisdrehmoments von der zeitlichen Änderung des Eingangsdrehmoments mit steigender Kadenz ab. Die Abhängigkeit des Basisdrehmoments von der zeitlichen Änderung des Eingangsdrehmoments als Funktion der Kadenz kann als eine monoton fallende oder streng monoton fallende Funktion dargestellt werden. Die Funktion kann durch eine Linear-, Polynom- oder Exponentialfunktion dargestellt werden. In anderen Worten kann das Basisdrehmoment bei kleineren Kadenzen stärker von der zeitlichen Änderung des Eingangsdrehmoments abhängen als bei größeren Kadenzen. Die Gewichtung der Änderung des Eingangsdrehmoments kann beim Bestimmen des Basisdrehmoments mit steigender Kadenz abnehmen.

Im Schritt des Bestimmens des Basisdrehmoments nimmt die Abhängigkeit des Basisdrehmoments von der zeitlichen Änderung der Kadenz mit steigender Kadenz zu. Die Abhängigkeit des Basisdrehmoments von der zeitlichen Änderung der Kadenz als Funktion der Kadenz kann als eine monoton steigende oder streng monoton steigende Funktion dargestellt werden. Die Funktion kann durch eine Linear-, Polynom- oder Exponentialfunktion dargestellt werden. In anderen Worten kann das Basisdrehmoment bei kleineren Kadenzen weniger stark von der zeitlichen Änderung der Kadenz abhängen als bei größeren Kadenzen. Die Gewichtung der Änderung der Kadenz kann beim Bestimmen des Basisdrehmoments mit steigender Kadenz zunehmen.

Eine Summe der Gewichtungen der Änderungen von Eingangsdrehmoment und Kadenz kann konstant sein. In anderen Worten können sich die Gewichtungen invers zueinander verhalten. Wenn die Gewichtung bezüglich der zeitlichen Änderung des Drehmoments bei kleineren Kadenzen größer ist, kann die Gewichtung bezüglich der Kadenz niedriger sein. Umgekehrt kann die Gewichtung bezüglich des Drehmoments bei größeren Kadenzen niedriger sein, und die Gewichtung bezüglich der Kadenz kann größer sein.

Das Bestimmen des Basisdrehmoments kann über eine oder mehrere Tabellen erfolgen. So kann eine Tabelle die Abhängigkeit des Basisdrehmoments von der zeitlichen Änderung des Eingangsdrehmoments beschreiben. In Spalten der Tabelle können relative Änderungen des Basisdrehmoments bezüglich einer spaltenspezifischen zeitlichen Änderung des Eingangsdrehmoments beschrieben sein. In den Zeilen können diese relativen Änderungen des Basisdrehmoments für verschiedene Kadenzen beschrieben sein. Die Tabelle kann für diskrete Werte der Änderung des Eingangsdrehmoments und der Kadenz Einträge für eine relative Änderung des Basisdrehmoments enthalten. Einträge können auch gleich null sein, wenn für die dazugehörige Änderung des Eingangsdrehmoments und der Kadenz keine relative Änderung des Basisdrehmoments erfolgen soll. Einträge können positiv und negativ sein, wodurch das Basisdrehmoment vergrößert und verkleinert werden kann. Über das Basisdrehmoment aus dem vorherigen Bestimmungsschritt und der über die Tabelle bestimmten relativen Änderung des Basisdrehmoments kann das aktuelle Basisdrehmoment bestimmt werden. Eine ähnlich aufgebaute Tabelle kann die Abhängigkeit des Basisdrehmoments von der zeitlichen Änderung der Kadenz beschreiben. Die Einträge können sich dabei invers zueinander verhalten, gemäß der zuvor beschriebenen inversen Gewichtungen. Die aus den beiden Tabellen entnommenen relativen Änderungen des Basisdrehmoments können miteinander verrechnet werden, um eine gesamte relative Änderung des Basisdrehmoments zu erhalten. Die Dynamikfunktion kann Tabellen mit geänderten Werten für die relative Änderung des Basisdrehmoments aufweisen. Somit kann das zu bestimmende Basisdrehmoment schneller erreicht oder angefiltert werden.

Das Verfahren weist ferner einen Schritt eines Ansteuerns des Elektromotors mit einem Zieldrehmoment in Abhängigkeit von dem Basisdrehmoment auf. Ein Bestimmen des Zieldrehmoments kann nach dem Bestimmen des Basisdrehmoments und in Abhängigkeit von dem Basisdrehmoments erfolgen. Das Zieldrehmoment kann gleich dem Basisdrehmoment sein. Das Zieldrehmoment kann das vom Elektromotor zu stellende Drehmoment darstellen, wobei dieses zusammen mit dem Eingangsdrehmoment des Fahrers das Gesamtdrehmoment darstellen kann. Das Gesamtdrehmoment kann mit der Kadenz die Gesamtleistung, welche zum Vortrieb des Fahrrads genutzt werden kann, darstellen. Nach dem Bestimmen des Basisdrehmoments und vor dem Ansteuern mit dem Zieldrehmoment kann das Basisdrehmoment noch verändert werden, insbesondere kann das Basisdrehmoment vor dem Bestimmen des Zieldrehmoments verändert werden. Somit kann das in Abhängigkeit von dem veränderten Basisdrehmoment bestimmte Zieldrehmoment zum Ansteuern des Elektromotors verwendet werden. Alternativ oder zusätzlich kann das bestimmte Zieldrehmoment vor dem Ansteuern des Elektromotors verändert werden.

Vorteilhafterweise kann somit ein Verfahren zur Steuerung eines Elektromotors eines elektrischen Fahrrads gezeigt sein, bei welchem das Ansteuern bei unterschiedlichen Kadenzen mit unterschiedlich gewichteten Abhängigkeiten von den zeitlichen Änderungen des Eingangsdrehmoments und der Kadenz erfolgt. Somit kann ein Fahrerwunsch bezüglich der Steuerung des Elektromotors, wobei der Fahrerwunsch lediglich über die Bewegung der Kurbel erfassbar ist, besser erkannt werden. Die Abhängigkeit des Basisdrehmoments kann so sein, dass bei kleinen Kadenzen eine hohe Abhängigkeit von der zeitlichen Änderung des Eingangsdrehmoments herrscht. Bei kleinen Kadenzen kann das Eingangsdrehmoment aufgrund einer allgemeinen Leistungsrelation zwischen Kadenz und Eingangsdrehmoment relativ groß sein. Die allgemeine Leistungsrelation kann die vom Fahrer aufgebrachte Leistung, gegeben durch Kadenz und Eingangsdrehmoment an der Kurbel, beschreiben, welche über weite Bereiche der Kadenz konstant sein kann. So kann bei niedrigen Kadenzen ein hohes Eingangsdrehmoment herrschen und bei höheren Kadenzen ein niedrigeres Eingangsdrehmoment herrschen, was zu einer nahezu konstanten Leistung führen kann. Eine Änderung des Eingangsdrehmoments kann bei großen Werten des Eingangsdrehmoments besser erfasst werden. Somit kann bei kleinen Kadenzen ein Änderungswunsch des Fahrers durch ein sich gegen die Zeit änderndes Eingangsdrehmoment besser durch das Verfahren berücksichtigt werden. Es kann bei höheren Kadenzen vorteilhaft sein, dass die Abhängigkeit des Basisdrehmoments mit steigender Kadenz von der zeitlichen Änderung der Kadenz zunimmt, da auch die Kadenz in Absolutwerten zunimmt und eine Änderung der Kadenz besser erfassbar und bestimmbar sein kann. Damit kann über die sich ändernde Kadenz ein Änderungswunsch des Fahrers bei hohen Kadenzen besser erkennbar sein.

Gemäß einer weiteren Ausführungsform kann das Bestimmen des Basisdrehmoments in Abhängigkeit von einem Fahrzustand erfolgen. Der Fahrzustand kann zumindest einer sein von Stillstand, Anfahren, Fahren, Beschleunigen, Kickdown, Rollen ohne Motorunterstützung und Boost. Der Fahrzustand kann in Abhängigkeit von einer relativen Geschwindigkeit des Fahrrads gegenüber dem Untergrund bestimmt werden. So können in unterschiedlichen Fahrzuständen die Abhängigkeiten des Basisdrehmoments von der zeitlichen Änderung des Eingangsdrehmoments und von der zeitlichen Änderung der Kadenz als Funktion der Kadenz unterschiedlich sein. Für jeden Fahrzustand können fahrzustand-spezifische Tabellen bezüglich der Abhängigkeit zwischen Basisdrehmoment und zeitlicher Änderung des Eingangsdrehmoments und Kadenz vorgesehen sein. Funktionen, die die Gewichtungen der Änderungen des Eingangsdrehmoments und der Kadenz gegen die Kadenz beschreiben, können für verschiedene Fahrzustände unterschiedlich sein. Beispielsweise kann im Fahrzustand Anfahren das Basisdrehmoment stärker von der zeitlichen Änderung des Eingangsdrehmoments abhängen als bei gleicher Kadenz im Fahrzustand Beschleunigen während der Fahrt, also mit einer bereits vorhandenen relativen Geschwindigkeit des Fahrrads gegenüber dem Untergrund.

Vorteilhafterweise kann mit dem Verfahren somit die Gewichtung der zeitlichen Änderungen des Eingangsdrehmoments und der Kadenz in Abhängigkeit von den Fahrzuständen so verschoben werden, dass der Fahrerwunsch in jedem Fahrzustand bestmöglich anhand der Änderungen des Eingangsdrehmoments und der Kadenz erfasst werden kann. So kann es beim Fahrzustand des Anfahrens sinnvoller sein, bei niedriger Kadenz das Eingangsdrehmoment stärker zu gewichten, und beim Beschleunigen in Fahrt kann es sinnvoller sein, die Änderung der Kadenz bei ansonsten gleicher absoluter Kadenz stärker zum Bestimmen des Basisdrehmoments zu gewichten. So kann der Fahrerwunsch in jedem Fahrzustand bestmöglich erkannt werden, und dadurch kann der Elektromotor optimal gemäß dem Fahrzustand und Fahrerwunsch gesteuert werden.

Gemäß einer weiteren Ausführungsform kann das Verfahren ferner einen Schritt eines Bestimmens einer Kurbelstellung in Abhängigkeit von der zeitlichen Änderung des Eingangsdrehmoments aufweisen. Der Schritt des Bestimmens der Kurbelstellung kann in Abhängigkeit von einem zeitlichen Verlauf des Eingangsdrehmoments erfolgen. Der zeitliche Verlauf kann mittels über die Zeit erfasster Werte des Eingangsdrehmoments bestimmt werden. Beispielsweise kann eine sinusartige Funktion das Eingangsdrehmoment als Funktion der Zeit beschreiben. Hier kann insbesondere eine Sinusquadratfunktion das Eingangsdrehmoment als Funktion der Zeit beschreiben. Die lokalen Maxima der Funktion können dabei die beiden Horizontalstellungen der Kurbel im Verlauf einer vollständigen Umdrehung der Kurbel beschreiben, da bei einer als konstant angenommenen Kraft vom Fahrer auf das Pedal das Eingangsdrehmoment in diesen Kurbelstellungen aufgrund des maximalen Hebels maximal ist.

Vorteilhafterweise kann auch in Fällen, in denen das Motorsteuergerät keine Information bezüglich der absoluten Kurbelstellung hat, die Kurbelstellung mittels der bestimmten zeitlichen Änderung des Eingangsdrehmoments bestimmt werden.

Gemäß einer weiteren Ausführungsform kann der Schritt des Bestimmens des Basisdrehmoments einen Schritt eines Bereinigens des Eingangsdrehmoments um die Kurbelstellung aufweisen. Die Kurbelstellung kann auf einem Speicher gespeichert sein, worauf das das Verfahren ausführende Motorsteuergerät zugreifen kann. Alternativ oder zusätzlich kann die Kurbelstellung im Schritt des Bestimmens der Kurbelstellung bestimmt werden. Aufgrund des sich sinusförmig mit einer Kurbelumdrehung ändernden Hebels zwischen einem Tretlager der Kurbel und dem Pedal kann sich auch das Eingangsdrehmoment ändern. Alternativ oder zusätzlich kann sich das Eingangsdrehmoment aufgrund sich ändernder Krafteinwirkung des Fahrers auf das Pedal ändern. So kann in einer Winkelstellung zwischen 0°, wobei 0° die Kurbel an seinem höchsten Punkt beschreibt, und 45° keine oder lediglich minimale Kraft des Fahrers auf das Pedal aufgewendet werden. Ähnliches gilt für Winkelstellungen zwischen 135 und 180°. In anderen Worten kann das Basisdrehmoment nur von Eingangsdrehmomenten bei Kurbelstellungen zwischen 45° und 135° abhängen. Der Schritt des Bereinigens kann für Eingangsdrehmomente ab einer Grenzkadenz erfolgen, da unterhalb der Grenzkadenz beispielsweise noch keine Kurbelstellung bestimmbar ist.

Somit kann vorteilhafterweise das Verfahren derart ausgestaltet sein, dass lediglich eine das Fahrverhalten und den Änderungswunsch beschreibende Untermenge von erfassten Eingangsdrehmomenten zur Bestimmung des Basisdrehmoments verwendet werden kann. Somit kann das Basisdrehmoment unabhängig von Werten des Eingangsdrehmoments sein, welche bei einer Kurbelstellung erfassbar sind, welche nicht das wirkliche Eingangsdrehmoment des Fahrers wiedergeben können, etwa 0° - 45° und alternativ oder zusätzlich 135° - 180°. Damit kann der Fahrerwunsch exakter erfassbar sein und das Ansteuern des Elektromotors mit dem Zieldrehmoment den wirklichen Fahrerwunsch noch besser entsprechen.

Gemäß einer weiteren Ausführungsform kann das Verfahren ferner einen Schritt eines Anpassens des Basisdrehmoments in Abhängigkeit von einem Fahrmodus aufweisen. Das Anpassen kann ein Verstärken, konstant Halten oder Verringern des bestimmten Basisdrehmoments umfassen. Der Fahrmodus kann einen bestimmten Modus in Abhängigkeit von fahrphysikalischen Größen, wie zum Beispiel einer Steigung, einer Querbeschleunigung, einer Neigung und alternativ oder zusätzlich dem Eingangsdrehmoment einnehmen. Der Fahrmodus kann ein Modus sein von einem ECO-Modus, einem Tourmodus, einem Trailmodus, einem benutzerspezifischen Modus und einem Automodus. So kann beispielsweise in dem ECO-Modus das Basisdrehmoment verringert werden und in einem Tourmodus kann das Basisdrehmoment um den Faktor 2,5 erhöht werden. Der Faktor, mit welchem das Basisdrehmoment in Abhängigkeit von dem Fahrmodus angepasst werden kann, kann als Gain-Faktor bezeichnet werden. Der Fahrmodus kann durch einen aktiven Fahrerwunsch über eine Benutzerschnittstelle, beispielsweise über einen Schalter am Lenker, vom Fahrer vorgegeben werden.

Vorteilhafterweise kann das Basisdrehmoment und somit das Ansteuern des Elektromotors mit dem Zieldrehmoment von einem aktiv durch den Fahrer und über eine Benutzerschnittstelle vorgegebenen Benutzerwunsch angepasst werden.

Das Anpassen des Basisdrehmoments in Abhängigkeit von dem Fahrmodus kann, wie weitere Schritte eines Anpassens des Basisdrehmoments in Abhängigkeit von anderen Größen, nach dem Schritt des Bestimmens des Basisdrehmoments und vor dem Schritt des Bestimmens des Zieldrehmoments in Abhängigkeit von dem Basisdrehmoment erfolgen. Das Bestimmen des Zieldrehmoments kann in Abhängigkeit von dem angepassten Basisdrehmoment erfolgen. Ein oder mehrere Schritte des Anpassens des Basisdrehmoments in Abhängigkeit von verschiedenen Größen können unabhängig voneinander und in beliebiger Reihenfolge erfolgen.

Gemäß einer weiteren Ausführungsform kann das Verfahren ferner einen Schritt eines Anpassens des Basisdrehmoments in Abhängigkeit von der Kadenz aufweisen, wobei der Schritt des Anpassens in Abhängigkeit der Kadenz unabhängig von dem erfassten Eingangsdrehmoment erfolgen kann. In anderen Worten kann nach dem Bestimmen des Basisdrehmoments in Abhängigkeit von den zeitlichen Änderungen des Eingangsdrehmoments und der Kadenz das bestimmte Basisdrehmoment in Abhängigkeit von der Kadenz angepasst werden. Das Anpassen kann ein Verstärken, konstant Halten oder Verringern des bestimmten Basisdrehmoments umfassen. Das Anpassen des Basisdrehmoments in Abhängigkeit von der Kadenz kann in unterschiedlichen Modi unterschiedlich erfolgen. Beispielsweise kann in einem ersten Modus das Basisdrehmoment mit einem Faktor größer 1 bei einer Kadenz ungleich 0 konstant über alle Kadenzen angepasst werden, also vergrößert werden. In einem zweiten Modus kann kadenzabhängig mit Faktoren größer 1 das Basisdrehmoment mit größer werdenden Kadenzen verstärkt vergrößert werden.

Vorteilhafterweise kann somit eine Gewichtung des absoluten Wertes der Kadenz beim Anpassen des Basisdrehmoments erfolgen.

Gemäß einer weiteren Ausführungsform kann das Verfahren ferner einen Schritt eines Anpassens des Basisdrehmoments in Abhängigkeit von einer Geschwindigkeit des Fahrrads aufweisen. Das Anpassen kann ein Verstärken, konstant Halten oder Verringern des bestimmten Basisdrehmoments umfassen. Das Anpassen des Basisdrehmoments in Abhängigkeit von der Geschwindigkeit kann in unterschiedlichen Modi unterschiedlich erfolgen. Beispielsweise kann in einem ersten Modus das Basisdrehmoment mit einem Faktor größer 1 für alle Geschwindigkeiten ungleich 0 konstant vergrößert werden. In einem zweiten Modus kann das Basisdrehmoment mit einem mit der Geschwindigkeit größer werdenden Faktor vergrößert werden. Alternativ oder zusätzlich kann das Verfahren ferner einen Schritt eines Anpassens des Basisdrehmoments in Abhängigkeit eines Fahrwiderstands während der Fahrt aufweisen. Der Fahrwiderstand kann einen Luftwiderstand und alternativ oder zusätzlich einen Rollreibungswiderstand umfassen.

Vorteilhafterweise kann das Verfahren somit das Basisdrehmoment an Widerstand aufgrund von mit steigender Geschwindigkeit steigender Roll- und Luftreibung anpassen und somit den Widerständen entgegenwirken.

Gemäß einer weiteren Ausführungsform kann das Verfahren ferner einen Schritt eines Anpassens des Basisdrehmoments in Abhängigkeit von einer Steigung eines Fahruntergrundes aufweisen. Das Anpassen kann ein Verstärken, konstant Halten oder Verringern des bestimmten Basisdrehmoments umfassen. Das Basisdrehmoment kann mit positiv größer werdender Steigung des Fahruntergrundes, also bei Bergauffahrt, einen immer größer werdenden Faktor größer 1 zum Anpassen aufweisen. Bei kleiner werdenden und negativen Steigungen, also bei Bergabfahrt und einem immer steiler werdenden Berg, kann das Basisdrehmoment mit einem Faktor kleiner 1 und kleiner werdend angepasst werden. In anderen Worten kann bei Bergauffahrt und immer steiler werdender Bergauffahrt das Basisdrehmoment verstärkt vergrößert werden und bei Bergabfahrt und immer steiler werdender Bergabfahrt das Basisdrehmoment immer stärker verringert werden. Der Schritt des Anpassens des Basisdrehmoments in Abhängigkeit von der Steigung kann in unterschiedlichen Modi unterschiedlich erfolgen. In einem ersten Modus können die steigungsabhängigen Faktoren zum Anpassen des Basisdrehmoments ein Vielfaches von Faktoren eines zweiten Modus sein. So kann in unterschiedlichen Modi die steigungsbezogene Unterstützung unterschiedlich erfolgen. Der Modus kann durch den Fahrer mittels aktiver Benutzereingabe über eine Benutzerschnittstelle ausgewählt werden.

Somit kann vorteilhafterweise mit dem Verfahren auf Steigung des Fahruntergrundes eingegangen werden und das Zieldrehmoment kann, angepasst auf die Steigung, bestimmt und zum Ansteuern des Elektromotors verwendet werden.

Gemäß einer weiteren Ausführungsform kann das Verfahren ferner einen Schritt eines Anpassens des Basisdrehmoments in Abhängigkeit von einer Neigung des Fahrrads relativ zur Richtung der Gewichtskraft aufweisen. Das Anpassen kann ein Verstärken, konstant Halten oder Verringern des bestimmten Basisdrehmoments umfassen. Die Neigung kann beispielsweise nach rechts in positiven Werten und nach links in negativen Werten definiert sein. Das Fahrrad kann bei Kurvenfahrt eine Neigung in die eine oder in die andere Richtung aufweisen. So kann beispielsweise bei in absoluten Werten zunehmender Neigung, also unabhängig von der Neigungsrichtung, das Basisdrehmoment mit einer mit zunehmender Neigung kleiner werdenden Faktor kleiner 1 angepasst und damit verringert werden. In unterschiedlichen Modi können bei gleichen Neigungswinkeln unterschiedliche Faktoren verwendet werden.

Vorteilhafterweise kann das Verfahren somit auf Kurvenfahrt oder in anderen Fahrzustände, in welchen das Fahrrad geneigt sein kann, das Basisdrehmoment anpassen und damit das Zieldrehmoment zum Ansteuern des Elektromotors bestimmen. So kann beispielsweise bei Kurvenfahrt auf ein besonders starkes Beschleunigen verzichtet werden, so dass das Verfahren auf die bei der Kurvenfahrt auftretenden Querbeschleunigungen mit im Vergleich zur Geradeausfahrt verringerten Längsbeschleunigungen aufgrund des Ansteuerns des Elektromotors reagieren kann. Ein Ausbrechen oder Rutschen von Rädern des Fahrrads aufgrund von zu hohen Beschleunigungen kann somit verhindert werden. In unterschiedlichen Modi können bei gleichen Neigungswinkeln unterschiedliche Faktoren verwendet werden. So können sportlichere Fahrer, welche auch eine höhere Unterstützung bei großen Neigungen handhaben können, einen Modus wählen, bei dem die neigungsabhängigen Faktoren zum Anpassen des Basisdrehmoments zu größeren Werten des Basisdrehmoments führen können.

Gemäß einer weiteren Ausführungsform kann vor dem Schritt des Ansteuerns des Elektromotors mit dem Zieldrehmoment in einem Schritt eines Limitierens das Zieldrehmoment auf einen Maximalwert limitiert werden. Der Maximalwert kann auf einem Speicher gespeichert sein und von dem das Verfahren ausführende Motorsteuergerät ausgelesen werden. Der Maximalwert kann absolut sein. Der Maximalwert kann mehrere einzelne Maximalwerte umfassen, welche jeweils einzeln nicht überschritten werden dürfen. Der Maximalwert kann alternativ oder zusätzlich relativ sein, sodass eine maximale Leistung, berechnet aus Zieldrehmoment und Kadenz, nicht überschritten werden kann. Der Maximalwert kann alternativ oder zusätzlich von externen Größen abhängen, wie von der Geschwindigkeit des Fahrrads über Grund, von der Temperatur oder von externen Signalen. Externe Signale können beispielsweise Signale von Verkehrssteuerungen, wie Ampeln, sein und Information bezüglich eines Verkehrsflusses, beispielsweise eine grüne Welle, aufweisen. So kann das Ansteuern des Elektromotors in Abhängigkeit der Verkehrssituation erfolgen. Alternativ oder zusätzlich kann das Ansteuern des Elektromotors in Abhängigkeit der Außentemperatur erfolgen, so dass eine temperaturabhängige Maximalleistung des Elektromotors nicht überschritten werden kann und damit eine dauerhafte Schädigung des Elektromotors vermieden werden kann. Die Abhängigkeit des Maximalwerts von der Geschwindigkeit kann aufgrund einer gesetzlichen Vorgabe vorliegen. Der Maximalwert kann von Positionsdaten, wie GPS-Daten, abhängig sein. So kann eine Reichweitenkontrolle durch das Verfahren implementiert werden. Der Maximalwert kann von Daten zur Unfallvermeidung abhängig sein. So kann der Maximalwert aufgrund Information von einem weiteren Fahrzeug in unmittelbarer Umgebung abhängig sein, beispielsweise zur Kollisionsvermeidung. Der Maximalwert kann alternativ oder zusätzlich von ABS-Daten abhängig sein, sodass das Fahrrad manövrierfähig bleiben kann. Der Maximalwert kann abhängig von der Kadenz sein. So kann bei Kadenz gleich 0 der Maximalwert des Zieldrehmoments auf 0 vorgebbar sein. Durch Benutzereingabe kann der Fahrer eine Schiebehilfe am Fahrrad aktivieren, wobei der Maximalwert des Zieldrehmoments so einstellbar ist, dass der Elektromotor auch bei Kadenz gleich 0 so angesteuert werden kann, dass das Fahrrad bis zu einer Maximalgeschwindigkeit von etwa 6km/h beschleunigt werden kann.

Alternativ oder zusätzlich zum Schritt des Limitierens des Zieldrehmoments kann das Verfahren einen Schritt eines Erhöhens des Zieldrehmoments auf einen Minimalwert aufweisen. Beispielsweise kann das Erhöhen in Abhängigkeit von Gesundheitsdaten des Fahrers erfolgen. So kann beispielsweise die Eingangsleistung des Fahrers erkannt werden, und ein Erhöhen des Zieldrehmoments so erfolgen, dass eine Maximalleistung des Fahrers nicht überschritten wird.

Ein weiterer Aspekt der Erfindung betrifft ein Motorsteuergerät. Das Motorsteuergerät kann eingerichtet sein, das Verfahren gemäß einer Ausführungsform des vorhergehenden Aspekts der Erfindung zum Steuern eines Elektromotors auszuführen.

Ein weiterer Aspekt der Erfindung betrifft ein Fahrrad, welches einen Elektromotor und ein Motorsteuergerät gemäß dem vorherigen Aspekt der Erfindung aufweist. Das Fahrrad kann ferner eine Kurbel, Pedale, eine Batterie, eine Benutzerschnittstelle und/oder Verkabelung zum Verbinden von Batterie, Benutzerschnittstelle, Elektromotor und Motorsteuergerät aufweisen.

### Kurze Beschreibung der Figuren

- Figur 1: zeigt schematisch Schritte eines Verfahrens zur Steuerung eines Elektromotors gemäß einer Ausführungsform.
- Figur 2: zeigt schematisch die Gewichtung der Abhängigkeiten zum Bestimmen des Basisdrehmoments im Verfahren zur Steuerung eines Elektromotors gemäß einer Ausführungsform.

### Detaillierte Beschreibung von Ausführungsformen

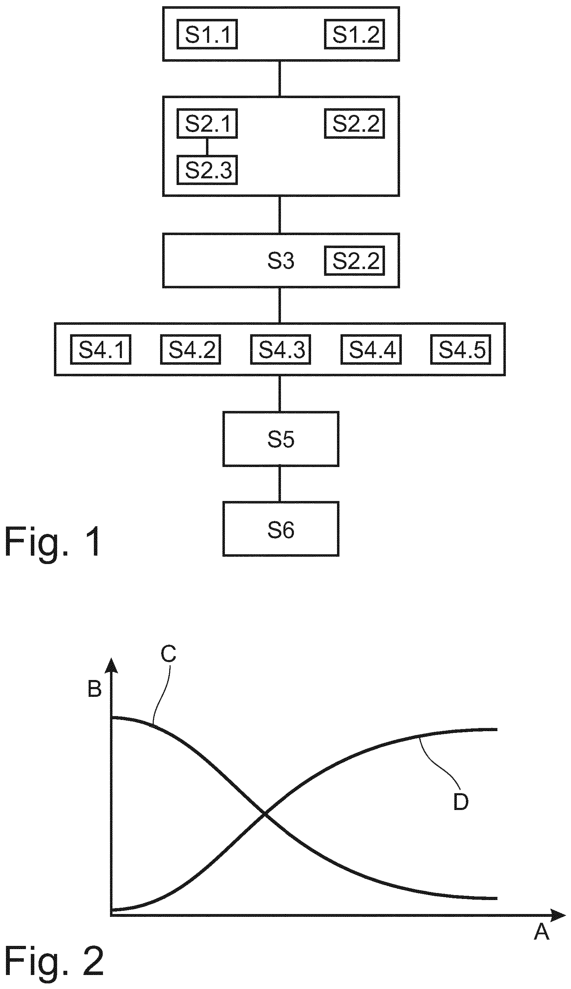

Figur 1 zeigt schematisch Schritte eines Verfahrens zur Steuerung eines Elektromotors gemäß einer Ausführungsform. Der Elektromotor ist Teil eines elektrischen Fahrrads, und das Fahrrad weist eine Kurbel auf. Der Elektromotor ist mit der Kurbel verbunden. Das Fahrrad weist ein Motorsteuergerät zum Steuern des Elektromotors auf, wobei das Motorsteuergerät eingerichtet ist, das Verfahren auszuführen. Das Fahrrad weist einen Drehmomentsensor, angebracht an der Kurbel, zum Erfassen S1.1 eines Eingangsdrehmoments auf. Das Eingangsdrehmoment ist ein von einem Fahrer des Fahrrads auf die Kurbel aufgebrachtes Drehmoment. Der Sensor erfasst das Eingangsdrehmoment periodisch und damit zu mehreren Zeitpunkten. Ein weiterer Sensor des Fahrrads erfasst die Kadenz der Kurbel. Das Erfassen S1.2 der Kadenz der Kurbel erfolgt periodisch und damit für mehrere Zeitpunkte. Das Erfassen S1.1 des Eingangsdrehmoments und das Erfassen S1.2 der Kadenz erfolgen voneinander unabhängig.

Das Verfahren weist einen Schritt eines Bestimmens S2.1 einer zeitlichen Änderung des Eingangsdrehmoments auf. Der Schritt des Bestimmens S2.1 erfolgt basierend auf dem erfassten Eingangsdrehmoment zu unterschiedlichen Zeitpunkten. Das Verfahren weist einen Schritt eines Bestimmens S2.2 einer zeitlichen Änderung der Kadenz auf. Der Schritt des Bestimmens S2.2 erfolgt basierend auf der erfassten Kadenz zu unterschiedlichen Zeitpunkten. Die Schritte des Bestimmens S2.1, S2.2 der zeitlichen Änderungen des Eingangsdrehmoments und der Kadenz erfolgen unabhängig voneinander. Die zeitlichen Änderungen des Eingangsdrehmoments und der Kadenz sind relative Änderungen von Eingangsdrehmoment und Kadenz zu vorherig erfassten Werten von Eingangsdrehmoment und Kadenz. In Abhängigkeit des Schritts des Bestimmens S2.1 der zeitlichen Änderung des Eingangsdrehmoments erfolgt ein Schritt eines Bestimmens S2.3 einer Kurbelstellung. Das Bestimmen der Kurbelstellung S2.3 erfolgt in Abhängigkeit von einem zeitlichen Verlauf des Eingangsdrehmoments. Der zeitliche Verlauf des Eingangsdrehmoments ist dabei abhängig von der bestimmten zeitlichen Änderung des Eingangsdrehmoments.

Das Verfahren weist einen Schritt eines Bestimmens S3 eines Basisdrehmoments auf. Der Schritt des Bestimmens S3 des Basisdrehmoments erfolgt in Abhängigkeit der zeitlichen Änderung des Eingangsdrehmoments und in Abhängigkeit der zeitlichen Änderung der Kadenz. Figur 2 zeigt dabei eine Gewichtung der Abhängigkeiten. Entlang der Hochwertachse B sind die Gewichtungen der Abhängigkeiten aufgetragen, die zeitlichen Änderung des Eingangsdrehmoments, Kurve C, und die zeitlich Änderung der Kadenz, Kurve D, sind als Funktion der Kadenz, dargestellt auf der Rechtwertachse A, aufgetragen. Die Gewichtungen bestimmen die Abhängigkeiten beim Bestimmen S3 des Basisdrehmoments. So hängt bei kleinen Kadenzen das Basisdrehmoment stark von der zeitlichen Änderung des Eingangsdrehmoments ab. Bei höher werdenden Kadenzen nimmt diese Gewichtung ab. Gleichzeitig nimmt die Gewichtung und damit die Abhängigkeit des Basisdrehmoments von der zeitlichen Änderung der Kadenz mit steigender Kadenz zu. Da das Produkt aus Kadenz und Drehmoment die Leistung ergibt und die Leistung, aufgebracht durch den Fahrer, über weite Teile des Fahrens als nahezu konstant anzunehmen ist, ergibt sich, dass die aufsummierten Gewichtungen der zeitlichen Änderungen von Eingangsdrehmoment und Kadenz über weite Teile der Kadenz nahezu konstant sein sollen.

Das Verfahren weist einen Schritt eines Bereinigens S3.1 des Eingangsdrehmoments um die Kurbelstellung auf. Der Schritt des Bereinigens S3.1 erfolgt während des Schritts des Bestimmens S3 des Basisdrehmoments, sodass das im Schritt des Bestimmens S3 bestimmte Basisdrehmoment um die Kurbelstellung bereinigt ist.

Das Verfahren weist ferner einen Schritt eines Anpassens S4.1 des Basisdrehmoments in Abhängigkeit des Fahrmodus auf. Ferner weist das Verfahren einen Schritt eines Anpassens S4.2 des Basisdrehmoments in Abhängigkeit der Kadenz auf, wobei der Schritt des Anpassens S4.2 unabhängig von dem erfassten Eingangsdrehmoment erfolgt. Ferner weist das Verfahren einen Schritt eines Anpassens S4.3 des Basisdrehmoments in Abhängigkeit der Geschwindigkeit des Fahrrads auf. Ferner weist das Verfahren einen Schritt eines Anpassens S4.4 des Basisdrehmoments in Abhängigkeit der Steigung des Fahruntergrundes auf. Ferner weist das Verfahren einen Schritt eines Anpassens S4.5 des Basisdrehmoments in Abhängigkeit der Neigung des Fahrrads relativ zur Richtung der Gewichtskraft auf. Die Schritte des Anpassens S4.1 - S4.5 erfolgen gleichzeitig, wobei jeder Anpassschritt einen einzelnen Faktor eines Produktes zum Anpassen des Basisdrehmoments darstellt. Die Schritte des Anpassens S4.1 - S4.5 erfolgen unabhängig voneinander. So kann in einem Fall lediglich eine Untermenge der Schritte des Anpassens S4.1 - S4.5 erfolgen. Nach dem letzten Schritt des Anpassens, S4.1 - S4.5 wird ein Zieldrehmoment in Abhängigkeit von dem bestimmten und angepassten Basisdrehmoment bestimmt.

Das Verfahren weist ferner einen Schritt eines Limitierens S5 des Zieldrehmoments auf einen Maximalwert auf. Der Maximalwert ist ein absoluter Wert in Newtonmeter. Der Maximalwert gibt den durch die bauliche Art begrenzten Maximalwert des Elektromotors wieder. Durch Limitieren S5 des Zieldrehmoments auf den Maximalwert kann eine Dauerbenutzung des Elektromotors bis zu diesem Maximalwert sichergestellt werden, ohne dass Schäden auftreten können.

Das Verfahren weist einen Schritt eines Ansteuerns S6 des Elektromotors mit dem limitierten Zieldrehmoment auf. Hierbei wird die Versorgung des Elektromotors mit elektrischer Energie einer Batterie gemäß dem Zieldrehmoment gesteuert, sodass der Elektromotor das Zieldrehmoment bereitstellen kann.

### Bezugszeichen

- S1.1: (Schritt) Erfassen eines Eingangsdrehmoments
- S1.2: (Schritt) Erfassen einer Kadenz der Kurbel
- S2.1: (Schritt) Bestimmen einer zeitlichen Änderung des Eingangsdrehmoments
- S2.2: (Schritt) Bestimmen einer zeitlichen Änderung der Kadenz
- S2.3: (Schritt) Bestimmen einer Kurbelstellung
- S3: (Schritt) Bestimmen eines Basisdrehmoments
- S3.1: (Schritt) Bereinigen des Eingangsdrehmoments um die Kurbelstellung
- S4.1: (Schritt) Anpassen des Basisdrehmoments in Abhängigkeit von einem Fahrmodus
- S4.2: (Schritt) Anpassen des Basisdrehmoments in Abhängigkeit von der Kadenz
- S4.3: (Schritt) Anpassen des Basisdrehmoments in Abhängigkeit von einer Geschwindigkeit des Fahrrads
- S4.4: (Schritt) Anpassen des Basisdrehmoments in Abhängigkeit von einer Steigung eines Fahruntergrundes
- S4.5: (Schritt) Anpassen des Basisdrehmoments in Abhängigkeit von einer Neigung des Fahrrads
- S5: (Schritt) Limitieren eines Zieldrehmoments
- S6: (Schritt) Ansteuern des Elektromotors mit Zieldrehmoment in Abhängigkeit von Basisdrehmoment
- A: Kadenz
- B: Gewichtung der Abhängigkeiten
- C: zeitliche Änderung des Eingangsdrehmoments
- D: zeitliche Änderung der Kadenz

## Patentansprüche

1. Verfahren zur Steuerung eines Elektromotors eines elektrischen Fahrrads, wobei das Fahrrad den Elektromotor und eine Kurbel aufweist, wobei das Verfahren die Schritte aufweist:
- Erfassen (S1.1) eines Eingangsdrehmoments zu wenigstens zwei unterschiedlichen Zeitpunkten, wobei das Eingangsdrehmoment ein von einem Fahrer des Fahrrads auf die Kurbel aufgebrachtes Drehmoment ist,
- Erfassen (S1.2) einer Kadenz der Kurbel zu wenigstens zwei unterschiedlichen Zeitpunkten, **gekennzeichnet durch** die Schritte
- Bestimmen (S2.1) einer zeitlichen Änderung des Eingangsdrehmoments basierend auf dem erfassten Eingangsdrehmoment zu wenigstens zwei unterschiedlichen Zeitpunkten,
- Bestimmen (S2.2) einer zeitlichen Änderung der Kadenz basierend auf der erfassten Kadenz zu wenigstens zwei unterschiedlichen Zeitpunkten,
- Bestimmen (S3) eines Basisdrehmoments in Abhängigkeit von der zeitlichen Änderung des Eingangsdrehmoments und in Abhängigkeit von der zeitlichen Änderung der Kadenz, wobei im Schritt des Bestimmens (S3) die Abhängigkeit des Basisdrehmoments von der zeitlichen Änderung des Eingangsdrehmoments mit steigender Kadenz abnimmt, und wobei im Schritt des Bestimmens (S3) die Abhängigkeit des Basisdrehmoments von der zeitlichen Änderung der Kadenz mit steigender Kadenz zunimmt, und
- Ansteuern (S6) des Elektromotors mit einem Zieldrehmoment in Abhängigkeit von dem Basisdrehmoment.

2. Verfahren nach Anspruch 1, **gekennzeichnet durch** das Bestimmen (S3) des Basisdrehmoments in Abhängigkeit von einem Fahrzustand erfolgt.

3. Verfahren nach einem der Ansprüche 1 oder 2, **dadurch gekennzeichnet, dass** das Verfahren ferner einen Schritt eines Bestimmens (S2.3) einer Kurbelstellung in Abhängigkeit von der zeitlichen Änderung des Eingangsdrehmoments aufweist.

4. Verfahren nach einem der vorhergehenden Ansprüche, **dadurch gekennzeichnet, dass** der Schritt des Bestimmens (S3) des Basisdrehmoments einen Schritt eines Bereinigens (S3.1) des Eingangsdrehmoments um die Kurbelstellung aufweist.

5. Verfahren nach einem der vorhergehenden Ansprüche, **dadurch gekennzeichnet, dass** das Verfahren ferner einen Schritt eines Anpassens (S4.1) des Basisdrehmoments in Abhängigkeit von einem Fahrmodus aufweist.

6. Verfahren nach einem der vorhergehenden Ansprüche, **dadurch gekennzeichnet, dass** das Verfahren ferner einen Schritt eines Anpassens (S4.2) des Basisdrehmoments in Abhängigkeit von der Kadenz aufweist, wobei der Schritt des Anpassens (S4.2) in Abhängigkeit von der Kadenz unabhängig von dem erfassten Eingangsdrehmoments erfolgt.

7. Verfahren nach einem der vorhergehenden Ansprüche, **dadurch gekennzeichnet, dass** das Verfahren ferner einen Schritt eines Anpassens (S4.3) des Basisdrehmoments in Abhängigkeit von einer Geschwindigkeit des Fahrrads aufweist.

8. Verfahren nach einem der vorhergehenden Ansprüche, **dadurch gekennzeichnet, dass** das Verfahren ferner einen Schritt eines Anpassens (S4.4) des Basisdrehmoments in Abhängigkeit von einer Steigung eines Fahruntergrundes aufweist.

9. Verfahren nach einem der vorhergehenden Ansprüche, **dadurch gekennzeichnet, dass** das Verfahren ferner einen Schritt eines Anpassens (S4.5) des Basisdrehmoments in Abhängigkeit von einer Neigung des Fahrrads relativ zur Richtung der Gewichtskraft aufweist.

10. Verfahren nach einem der vorhergehenden Ansprüche, **dadurch gekennzeichnet, dass** vor dem Schritt des Ansteuerns (S6) des Elektromotors mit dem Zieldrehmoment in einem Schritt eines Limitierens (S5) das Zieldrehmoment auf einen Maximalwert limitiert wird.

11. Motorsteuergerät, welches Mittel aufweist, um das Verfahren nach einem der vorhergehenden Ansprüche zum Steuern eines Elektromotors auszuführen.

12. Fahrrad, welches einen Elektromotor und das Motorsteuergerät nach Anspruch 11 aufweist.

## Claims

1. Method for controlling an electric motor of an electric bicycle, wherein the bicycle comprises the electric motor and a crank, wherein the method comprises the steps of:
- detecting (S1.1) an input torque at at least two different points in time, wherein the input torque is a torque applied to the crank by a rider of the bicycle,
- detecting (S1.2) a cadence of the crank at at least two different points in time, **characterized by** the steps of
- determining (S2.1) a change in the input torque with respect to time based on the detected input torque at at least two different points in time,
- determining (S2.2) a change in the cadence with respect to time based on the detected cadence at at least two different points in time,
- determining (S3) a base torque depending on the change in the input torque with respect to time and depending on the change in the cadence with respect to time, wherein in the determining step (S3) the dependence of the base torque on the change in the input torque with respect to time decreases as the cadence increases, and in the determining step (S3) the dependence of the base torque on the change in the cadence with respect to time increases as the cadence increases, and
- driving (S6) the electric motor with a target torque depending on the base torque.

2. Method according to Claim 1, **characterized by** determining (S3) the base torque depending on a riding state.

3. Method according to either of Claims 1 and 2, **characterized in that** the method further comprises a step of determining (S2.3) a crank position depending on the change in the input torque with respect to time.

4. Method according to any of the preceding claims, **characterized in that** the step of determining (S3) the base torque comprises a step of adjusting (S3.1) the input torque about the crank position.

5. Method according to any of the preceding claims, **characterized in that** the method further comprises a step of adapting (S4.1) the base torque depending on a riding mode.

6. Method according to any of the preceding claims, **characterized in that** the method further comprises a step of adapting (S4.2) the base torque depending on the cadence, wherein the step of adapting (S4.2) depending on the cadence is performed independently of the detected input torque.

7. Method according to any of the preceding claims, **characterized in that** the method further comprises a step of adapting (S4.3) the base torque depending on a speed of the bicycle.

8. Method according to any of the preceding claims, **characterized in that** the method further comprises a step of adapting (S4.4) the base torque depending on a gradient of a surface being ridden on.

9. Method according to any of the preceding claims, **characterized in that** the method further comprises a step of adapting (S4.5) the base torque depending on an inclination of the bicycle relative to the direction of the weight.

10. Method according to any of the preceding claims, **characterized in that**, before the step of driving (S6) the electric motor with the target torque, the target torque is limited to a maximum value in a limiting step (S5).

11. Motor control unit which comprises means for executing the method according to any of the preceding claims for controlling an electric motor.

12. Bicycle, which comprises an electric motor and the motor control unit according to Claim 11.

## Revendications

1. Procédé de commande d'un moteur électrique d'un vélo électrique, le vélo comprenant le moteur électrique et une manivelle, le procédé comprenant les étapes consistant à :
- détecter (S1.1) un couple d'entrée à au moins deux instants différents, le couple d'entrée étant un couple appliqué à la manivelle par un cycliste sur le vélo,
- détecter (S1.2) une cadence de la manivelle à au moins deux instants différents, **caractérisé par** les étapes consistant à
- déterminer (S2.1) une variation temporelle du couple d'entrée sur la base du couple d'entrée détecté à au moins deux instants différents,
- déterminer (S2.2) une variation temporelle de la cadence sur la base de la cadence détectée à au moins deux instants différents,
- déterminer (S3) un couple de base en fonction de la variation temporelle du couple d'entrée et en fonction de la variation temporelle de la cadence, dans lequel, lors de l'étape de détermination (S3), la dépendance du couple de base par rapport à la variation temporelle du couple d'entrée diminue lorsque la cadence croît et lors de l'étape de détermination (S3), la dépendance du couple de base par rapport à la variation temporelle de la cadence augmente lorsque la cadence croît, et
- commander (S6) le moteur électrique avec un couple cible en fonction du couple de base.

2. Procédé selon la revendication 1, **caractérisé en ce que** la détermination (S3) du couple de base est effectuée en fonction d'un état de conduite.

3. Procédé selon l'une quelconque des revendications 1 ou 2, **caractérisé en ce que** le procédé comprend en outre une étape de détermination (S2.3) d'une position de manivelle en fonction de la variation temporelle du couple d'entrée.

4. Procédé selon l'une quelconque des revendications précédentes, **caractérisé en ce que** l'étape de détermination (S3) du couple de base comprend une étape de correction (S3.1) du couple d'entrée en fonction de la position de manivelle.

5. Procédé selon l'une quelconque des revendications précédentes, **caractérisé en ce que** le procédé comprend en outre une étape d'ajustement (S4.1) du couple de base en fonction d'un mode de conduite.

6. Procédé selon l'une quelconque des revendications précédentes, **caractérisé en ce que** le procédé comprend en outre une étape d'ajustement (S4.2) du couple de base en fonction de la cadence, l'étape d'ajustement (S4.2) en fonction de la cadence étant effectuée indépendamment du couple d'entrée détecté.

7. Procédé selon l'une quelconque des revendications précédentes, **caractérisé en ce que** le procédé comprend en outre une étape d'ajustement (S4.3) du couple de base en fonction d'une vitesse du vélo.

8. Procédé selon l'une quelconque des revendications précédentes, **caractérisé en ce que** le procédé comprend en outre une étape d'ajustement (S4.4) du couple de base en fonction d'une pente d'une surface de roulement.

9. Procédé selon l'une quelconque des revendications précédentes, **caractérisé en ce que** le procédé comprend en outre une étape d'ajustement (S4.5) du couple de base en fonction d'une inclinaison du vélo par rapport à la direction de la force de gravité.

10. Procédé selon l'une quelconque des revendications précédentes, **caractérisé en ce qu'**avant l'étape de commande (S6) du moteur électrique avec le couple cible, le couple cible est limité à une valeur maximale lors d'une étape de limitation (S5).

11. Appareil de commande de moteur comprenant des moyens pour mettre en œuvre le procédé selon l'une quelconque des revendications précédentes pour commander un moteur électrique.

12. Vélo comprenant un moteur électrique et l'appareil de commande de moteur selon la revendication 11.
